# EUROPÄISCHE PATENTSCHRIFT

(11) **EP 4 223 523 B1**
(45) Veröffentlichungstag und Bekanntmachung des Hinweises auf die Patenterteilung: **01.01.2025**
(21) Anmeldenummer: 23151008.2
(22) Anmeldetag: 10.01.2023
(51) Int. Cl.: B32B 37/08, B30B 15/06, B30B 15/34

(54) **VERFAHREN ZUM LAMINIEREN VON SUBSTRATSCHICHTEN ZU EINEM VERBUNDKÖRPER**
METHOD FOR LAMINATING SUBSTRATE LAYERS TO FORM A COMPOSITE BODY
PROCÉDÉ POUR LAMINER DES COUCHES DE SUBSTRAT POUR FORMER UN CORPS COMPOSITE

(30) Priorität: 13.01.2022 DE 102022100762
(43) Veröffentlichungstag der Anmeldung: 09.08.2023
(73) Patentinhaber: Bundesdruckerei GmbH, 10969 Berlin (DE)
(72) Erfinder: Gümmer, Andreas, 27308 Hohenaverbergen (DE); Frost, Dietmar, 31785 Hameln (DE)
(74) Vertreter: Mammel und Maser Patentanwälte PartG mbB

(56) Entgegenhaltungen:
- EP-A1- 3 412 458
- DE-A1- 102009 014 249
- DE-A1- 102018 119 179

## Beschreibung

Die Erfindung betrifft ein Verfahren zum Laminieren eines aus mehreren Substratschichten bestehenden Stapels zu einem Verbundkörper.

Aus der DE 10 2015 205 539 A1 sind ein Verfahren und eine Vorrichtung zum Laminieren eines mehrschichtigen Sicherheitsdokumentenkörpers bekannt, bei welchem eine thermische Presse mit mindestens einem beweglichen Stempel eingesetzt wird. Diese thermische Presse umfasst einen oberen bewegbaren Stempel und einen unteren unbewegbaren Stempel. Dem jeweiligen Stempel zugeordnet ist jeweils ein Presspolster. An diesem anliegend ist jeweils ein Laminierblech vorgesehen. Zwischen den Laminierblechen ist ein Stapel von Substratschichten vorgesehen, welcher durch die thermische Presse laminiert wird. Zur Erhöhung der Stückzahl bei der Produktion von solchen Verbundkörpern, insbesondere Dokumentenkörpern, ist vorgesehen, dass mehrere thermische Pressen in Reihe hintereinander in Betrieb genommen werden, um in einem mehrstufigen Kurztakt zu arbeiten. Beispielsweise sind zwei aufeinanderfolgende Heizpressen und zwei aufeinanderfolgende Kühlpressen vorgesehen. In der ersten Heizpresse werden beispielsweise das Laminierblech, das Presspolster und der Stapel vorgewärmt. In der zweiten Heizpresse wird der Stapel auf eine Laminiertemperatur aufgeheizt, sodass die einzelnen Schichten miteinander laminiert werden. In der ersten darauffolgenden Kühlpresse wird der Stapel in einer ersten Stufe gekühlt und darauffolgend in der zweiten Kühlpresse vollständig abgekühlt.

Aus der DE 10 2009 014 294 A1 ist eine Laminiervorrichtung zum Laminieren einer folienbandartigen mehrschichtigen thermoplastischen Folienanordnung bekannt. Diese Laminiervorrichtung umfasst eine Heizeinrichtung und eine Kühleinrichtung, die in Durchlaufrichtung der bandartigen Folie hintereinander angeordnet sind. Durch diese hintereinander gereihte Anordnung der Heiz- und Kühleinrichtung kann in aufeinander folgenden Schritten die Folienanordnung in einem Arbeitsschritt laminiert und in dem darauffolgenden Arbeitsschritt in der nächsten Station gekühlt werden. Gemäß einer weiteren Ausgestaltung dieser Laminiervorrichtung werden nach dem Laminieren der Folienanordnung die beidseitig zur Folienanordnung angeordneten Heizeinrichtungen jeweils auseinandergefahren, sodass in dieser oberen und unteren Position der Heizeinrichtung der Kühlblock eingefahren wird und darauffolgend mittels Pressen der Heizblock auf den Kühlblock wirkt, um diesen Kühlblock auf die Folienanordnung zum Kühlen in der Laminierposition niederzuhalten.

Diese Anordnung ist bezüglich des Bauraumes aufwändig als auch in der Konstruktion kostenintensiv.

Aus der EP 3 412 458 A1 ist eine Laminiervorrichtung sowie ein Verfahren zum Laminieren eines aus mehreren Substratschichten bestehenden Stapels zu einem Verbundkörper bekannt. Diese Laminiervorrichtung umfasst eine Laminiereinheit, welche eine Heizeinrichtung und eine Kühleinrichtung aufweist. Diese Heizeinrichtung und Kühleinrichtung ist aufeinanderfolgend in eine Arbeitsposition zum Stapel überführbar. In einem ersten Arbeitsschritt kann ein Aufheizen und Laminieren der zu einem Stapel angeordneten Schichten zu einem Verbundkörper und darauffolgend ein Kühlen des Verbundkörpers erfolgen.

Aus der DE 10 2018 119 179 A1 ist des Weiteren ein Verfahren und eine Laminiervorrichtung zum Laminieren eines aus mehreren Substratschichten bestehenden Stapels zu einem Verbundkörper bekannt. Diese Laminiervorrichtung umfasst eine obere Laminiereinheit sowie eine untere Laminiereinheit, wobei jede Laminiereinheit eine Heizeinrichtung und eine Kühleinrichtung umfasst. Diese sind thermisch zueinander entkoppelt. Die obere und die untere Laminiereinheit können mit einer Ansteuerungseinrichtung synchron in jeweils eine Arbeitsposition und eine Kühlposition verfahren werden. Dadurch wird ermöglicht, dass zum Laminieren von mehreren Substratschichten zu einem Verbundkörper an einer obersten und einer untersten Substratschicht eine Heizeinrichtung positionierbar ist. Analoges gilt darauffolgend zum Abkühlen des durch Lamination gebildeten Verbundkörpers mit einer Kühleinrichtung.

Außerdem sind aus der EP 3 608 103 A1 eine Laminiervorrichtung sowie ein Verfahren zum Laminieren eines aus mehreren Substratschichten bestehenden Stapels zu einem Verbundkörper bekannt. Die Laminiervorrichtung umfasst einen Grundkörper, einen Pressentisch, auf dem oder zu dem der Stapel in einer Arbeitsposition zur Bildung des Verbundkörpers positionierbar ist, eine oberhalb des Pressentischs vorgesehene Heizeinrichtung und Kühleinrichtung, die eine obere Laminiereinheit bilden, die thermisch zueinander entkoppelt sind und zur jeweiligen Anordnung der Heizeinrichtung oder Kühleinrichtung in einer Arbeitsposition die obere Laminiereinheit verfahrbar ist, wobei unterhalb des Pressentisches eine Heizeinrichtung und eine Kühleinrichtung vorgesehen sind, die eine untere Laminiereinheit bilden, die thermisch zueinander entkoppelt sind und zur jeweiligen Anordnung der Heizeinrichtung oder Kühleinrichtung in die Arbeitsposition die untere Laminiereinheit verfahrbar ist.

Zur Reduzierung von Zykluszeiten bei der Herstellung solcher Verbundkörper wird ein schnelles Aufheizen und darauffolgendes schnelles Abkühlen angestrebt. Allerdings kann dabei eine Beeinträchtigung in der Qualität bezüglich der Oberfläche des Verbundkörpers einhergehen.

Der Erfindung liegt die Aufgabe zugrunde, ein Verfahren zum Laminieren eines aus mehreren Schichten bestehenden Stapels zu einem Verbundkörper sowie eine Kühleinrichtung als auch eine Laminiervorrichtung mit einer Kühleinrichtung vorzuschlagen, durch welche die Qualität des Verbundkörpers verbessert wird.

Die der Erfindung zugrundeliegende Aufgabe wird durch ein Verfahren gelöst, bei welchem die zumindest eine Kühleinrichtung der Laminiervorrichtung vor dem Überführen in eine Kühlposition auf eine Starttemperatur aufgeheizt wird, welche niedriger als die Laminiertemperatur der Substratschichten und höher als die Kühltemperatur der Kühleinrichtung ist und dass die mit der Starttemperatur aufgewärmte zumindest eine Kühleinrichtung in der Kühlposition zur Anlage an dem Niederhalter des Stapels und/oder des Laminierblechs übergeführt wird und dass nach der Einnahme der Kühlposition durch die zumindest eine Kühleinrichtung eine Absenkung der Starttemperatur auf die Kühltemperatur der Kühleinrichtung angesteuert wird.

Durch dieses Verfahren wird ermöglicht, dass ein kontrolliertes Abkühlen des Verbundkörpers unmittelbar nach der Lamination der Substratschichten durch die zumindest eine Heizeinrichtung angesteuert wird. Aufgrund der oberhalb der Kühltemperatur vorgewärmten oder aufgewärmten zumindest einen Kühleinrichtung wird ein Abschrecken der nach der Lamination noch heißen Oberfläche des Verbundkörpers verhindert. Durch diese kontrollierte Abkühlung des Verbundkörpers beginnend mit der Starttemperatur der zumindest einen Kühlreinrichtung, die gegenüber der Kühltemperatur der zumindest einen Kühleinrichtung erhöht ist, kann der Herstellungs- bzw. Fertigungsprozess nicht nur flexibler, sondern auch sicher gestaltet werden, um eine hohe Produktqualität für den Verbundkörper zu erzielen. Insbesondere kann ein Abschrecken der Oberfläche des Verbundkörpers oder der äußersten Substratschicht des Verbundkörpers durch die zumindest eine Kühleinrichtung vermieden werden. Ein solches Abschrecken kann zu einer Blasenbildung oder zu Verwerfungen an der Oberfläche des Verbundkörpers führen.

Des Weiteren ist bevorzugt vorgesehen, dass die Kühleinrichtung eine Anlagefläche aufweist, die in der Kühlposition zur Anlage an dem Niederhalter und/oder dem Laminierblech positioniert wird und die Anlagefläche durch eine daran angrenzende Temperaturkammer temperiert wird. Diese Temperierkammer wird bevorzugt von einem Medium durchströmt, welches sowohl auf die Starttemperatur aufgewärmt als auch auf die Kühltemperatur heruntergekühlt werden kann. Durch die unmittelbare Zuordnung der Temperierkammer zur Anlagefläche kann ein hoher Temperaturgradient zwischen dem Verbundkörper oder zumindest der obersten Schicht des Verbundkörpers und der Temperaturkammer zum Abführen von Wärme ermöglicht werden.

Des Weiteren ist bevorzugt vorgesehen, dass zum Aufwärmen der Kühlvorrichtung das Durchströmen der Temperierkammer mit dem Medium gesperrt wird und zumindest ein in der Temperierkammer angeordnetes Heizelement oder zumindest ein der Temperierkammer zugeordnetes Heizelement aufgeheizt wird. Dadurch kann eine schnelle Erwärmung des in der Temperierkammer bevorrateten Mediums erfolgen, wodurch eine schnelle und gleichmäßige Aufwärmung der Anlagefläche gegeben ist. Als Medium kann beispielsweise Wasser, ein Kühlmittel oder ein gelförmiges Medium vorgesehen sein.

Vorteilhafterweise wird die zumindest eine Kühleinrichtung, insbesondere die Anlagefläche der zumindest einen Kühleinrichtung, auf eine Starttemperatur zwischen 30 °C bis 90 °C (Celsius) aufgeheizt. Vorzugsweise liegt die Starttemperatur der zumindest einen Kühleinrichtung, insbesondere die Starttemperatur der Anlagefläche der zumindest einen Kühleinrichtung bei 40 °C bis 60 C°. Dieser Temperaturbereich liegt unterhalb der Laminiertemperatur für einen solchen Verbundkörper. Die Laminiertemperatur für die Substratschichten des Stapels kann bei ca. 130 °C bis 150 °C liegen. Unter der Laminiertemperatur wird die Glasübergangstemperatur der jeweiligen Substratschicht verstanden, so dass die Substratschichten jeweils miteinander verschweißt oder laminiert werden. Bei einem Stapel von Substratschichten, die aus voneinander abweichendem thermoplastischem Material bestehen, wie beispielsweise Polypropylen, Polyethylen oder Polycarbonat, wird eine Laminiertemperatur derart bestimmt, dass diese gleich oder oberhalb der höchsten Glasübergangstemperatur des jeweiligen Materials der Substratschicht liegt. Die Aufheiztemperatur der Heizeinrichtung für die Lamination der Substratschichten zu dem Verbundkörper kann beispielsweise bei 140 °C bis 180 °C liegen. Die Aufheiztemperatur der zumindest einen Heizeinrichtung ist höher als die Laminiertemperatur des Stapels aus Substratschichten. Der zumindest eine Niederhalter und/oder das zumindest eine Laminierblech ist ebenfalls geeignet, auf diese Aufheiztemperatur aufgeheizt zu werden. Die zumindest eine Kühleinrichtung kann nach dem Abheben und Verfahren der zumindest einen Heizeinrichtung auf diesen temperierten Niederhalter und/oder zumindest eine Laminierblech in eine Ruheposition aufgesetzt werden. Daraufhin kann eine Kühlung des Niederhalters und/oder des Laminierblechs und des Verbundkörpers mit der Starttemperatur der Kühleinrichtung, erfolgen. Dadurch kann eine kontrollierte Abkühlung angesteuert werden.

Vorteilhafterweise ist vorgesehen, dass zeitgleich mit dem Anliegen der Anlagefläche der zumindest einen Kühleinrichtung die Temperierkammer der Kühleinrichtung geöffnet und mit dem Medium durchströmt wird. Das Medium weist eine Kühltemperatur auf, die niedriger als die Starttemperatur der Kühleinrichtung ist. Dadurch kann die Temperatur in der Temperierkammer und demzufolge der Anlagefläche der Kühleinrichtung reduziert werden. Gleichzeitig wird dadurch auch ein Abkühlen des Niederhalters und/oder des Laminierbleches und demzufolge des Verbundkörpers erzielt. Alternativ kann vorgesehen sein, dass nach dem Anliegen der Anlagefläche der zumindest einen Kühleinrichtung an dem Niederhalter und/oder dem Laminierblech die Temperierkammer zum Durchströmen mit dem Medium erst nach einer vorbestimmten Prozessdauer, beispielsweise von bis zu einer Minute oder von bis zu 30 Sekunden, geöffnet wird. Dadurch wird die Abkühlung der Kühleinrichtung zeitverzögert aus der Starttemperatur auf die Kühltemperatur der Kühleinrichtung gestartet.

Des Weiteren ist bevorzugt vorgesehen, dass das zumindest eine Heizelement in der Temperierkammer gleichzeitig mit dem Öffnen der Temperierkammer zum Durchströmen mit dem Medium abgeschalten wird. Dadurch kann eine beschleunigte Abkühlung erzielt werden. Alternativ kann auch vorgesehen sein, dass das zumindest eine Heizelement zeitverzögert mit dem Öffnen der Temperierkammer zum Durchströmen des Mediums abgeschalten wird. Dadurch kann der Kühlprozess über eine längere Zeitdauer angesteuert werden.

Gemäß einer bevorzugten Ausführungsform des Verfahrens ist vorgesehen, dass die Kühleinrichtung, insbesondere die Anlagefläche der Kühleinrichtung, auf die Kühltemperatur zwischen 15 °C bis 25 °C gekühlt wird. Ein solcher Temperaturbereich hat sich bevorzugt zum Abkühlen herausgestellt, ohne ein Abschrecken der Oberfläche des Verbundkörpers zu bewirken. Vorteilhafterweise wird das Kühlmedium mit einem Kühlaggregat abgekühlt, welches über einen Kühlkreislauf mit der Temperierkammer der Kühleinrichtung verbunden ist.

Des Weiteren ist bevorzugt vorgesehen, dass die zumindest eine Kühleinrichtung an einen Kühlkreislauf angeschlossen wird, der ein Kühlaggregat umfasst, durch welches das Medium temperiert wird. In dem Kühlkreislauf ist insbesondere eine Bypass-Leitung ansteuerbar, durch welche die Durchströmung der Temperaturkammer angesteuert oder gesperrt wird. Sofern die Bypass-Leitung in dem Kühlkreislauf geschlossen ist, wird das Medium über den Kühlkreislauf zwischen dem Kühlaggregat und der Temperierkammer ausgetauscht. Sofern die Bypass-Leitung geöffnet wird, erfolgt gleichzeitig eine Schließung der Temperierkammer. Dadurch ist ein Kurzschlusskreislauf für das Medium geschaffen, welches die Temperierkammer nicht durchströmt. Das Kühlaggregat kann von dem Medium weiter durchströmt werden, so dass dieses in der Temperierung auf den nachfolgenden Arbeitsschritt aufgeheizt oder gekühlt werden kann.

Des Weiteren ist bevorzugt vorgesehen, dass der Verbundkörper durch die zumindest eine Kühleinrichtung auf eine Temperatur von 30 °C bis 50 °C abgekühlt und darauffolgend aus der Kühlposition herausgeführt wird. Diese Temperatur des Verbundkörpers stellt die an einer Außenseite des Verbundkörpers erfassbare Temperatur dar. Die Kerntemperatur des Verbundkörpers kann höher sein. Dadurch kann bei einer nachfolgenden Handhabung des Verbundkörpers die Aufrechthaltung der Form- und/oder der Oberflächenqualität sichergestellt sein.

Des Weiteren ist bevorzugt vorgesehen, dass die Laminiervorrichtung eine obere und eine untere Laminiereinheit umfasst, die jeweils die Heizeinrichtung und die Kühleinrichtung umfassen. Die Kühleinrichtungen der oberen und unteren Laminiereinheit können bevorzugt gleichzeitig in die Kühlposition übergeführt werden. Dadurch kann auf beiden Seiten des Verbundkörpers eine gleichmäßige Abkühlung sowie eine Verkürzung der Abkühlungszeit erzielt werden.

Bevorzugt entspricht die Arbeitsposition der Heizeinrichtung der Kühlposition der Kühleinrichtung. Dadurch kann dieselbe Position des Stapels bzw des Verbundkörpers beim Laminieren und Abkühlen innerhalb der Laminiervorrichtung aufrechterhalten bzw beibehalten werden. Dies kann die Qualität des Verbundkörpers verbessern.

Die der Erfindung zugrundeliegende Aufgabe wird des Weiteren durch eine Kühleinrichtung für eine Laminiervorrichtung zur Durchführung des Verfahrens gemäß einer der vorbeschriebenen Ausführungsformen gelöst, wobei die Kühleinrichtung jedoch außerhalb des Schutzumfangs der Ansprüche liegt, welche einen Kühlkörper mit einer Anlagefläche zur Auflage auf einem Niederhalter und/oder zumindest einem Laminierblech aufweist, der zumindest eine der Anlagefläche zugeordnete Temperierkammer aufweist, welche zumindest einen Zu- und einen Ablauf für ein Medium aufweist, wobei in der Temperierkammer oder an die Temperierkammer angrenzend zumindest ein Heizelement vorgesehen oder positioniert ist, durch welches zumindest die Anlagefläche der Kühleinrichtung temperierbar ist. Bei dieser Kühleinrichtung ist vorgesehen, dass diese nicht nur zum Durchströmen mit dem Medium zum Abkühlen der Anlagefläche vorgesehen ist, sondern gleichzeitig auch zum Erwärmen des Mediums in der Temperierkammer zumindest ein Heizelement aufweist, so dass die Anlagefläche erwärmt wird und die Abkühlung des Verbundkörpers mit einer gegenüber der Kühltemperatur der Kühleinrichtung erhöhten Starttemperatur erfolgen kann.

Die Kühleinrichtung ist bevorzugt über den zumindest einen Zulauf und Ablauf der Temperierkammer über einen Kühlkreislauf mit einem Kühlaggregat verbunden und zwischen dem zumindest einen Zu- und Ablauf ist eine Bypass-Leitung mit Ventilen ansteuerbar. Sofern die Bypass-Leitung geschlossen ist, wird das Medium von dem Kühlaggregat zur Temperierkammer der Kühleinrichtung geführt, durchströmt diese und gelangt wieder zum Kühlaggregat. Sofern die Bypass-Leitung geöffnet ist, wird die Durchströmung der Temperierkammer gesperrt. Dadurch kann beispielsweise das Kühlaggregat fortwährend betrieben werden, so dass nach dem Erwärmen der Kühleinrichtung auf die Starttemperatur umgehend ein Abkühlen der Temperierkammer und demzufolge der Anlagefläche des Niederhalters und/oder des zumindest einen Laminierblechs ermöglicht ist.

Des Weiteren ist bevorzugt vorgesehen, dass zumindest die Anlagefläche der Kühleinrichtung aus einem wärmeleitfähigen Material, wie beispielsweise Kupfer, Messing, Aluminium und/oder einer Legierung davon hergestellt ist.

Zur Erhöhung der Kühlleistung der Kühleinrichtung durchströmt das Medium bevorzugt mit einem Volumenstrom von 5 bis 10 l/min die Temperierkammer.

Die der Erfindung zugrundeliegende Aufgabe wird des Weiteren durch eine Laminiervorrichtung zum Laminieren eines aus mehreren Substratschichten bestehenden Stapels zu einem Verbundkörper gelöst, wobei die Laminiervorrichtung jedoch außerhalb des Schutzumfangs der Ansprüche liegt, bei welchem zumindest eine Kühleinrichtung nach einer der vorstehenden Ausführungsformen verwendet wird. Eine solche Kühleinrichtung ermöglicht nach dem Aufheizen und Laminieren des aus mehreren Substratschichten bestehenden Stapels zu dem Verbundkörper darauffolgend eine kontrollierte Abkühlung des laminierten Verbundkörpers ohne ein Abschrecken der zumindest einen Oberfläche des Verbundkörpers zu bewirken.

Des Weiteren ist bevorzugt vorgesehen, dass die Kühleinrichtung thermisch entkoppelt zu einer Führungseinrichtung am Grundkörper der Laminiervorrichtung angeordnet ist, welche die obere und untere Laminiereinheit jeweils abwechselnd in eine Arbeitsposition zum zumindest einen Niederhalter und/oder zumindest einen Laminierblech überführt. Diese zusätzliche thermische Entkopplung, beispielsweise durch einen Isolierkörper, ermöglicht, dass die durch das zumindest eine Heizelement in der Temperierkammer der zumindest einen Kühleinrichtung erzeugte Wärme innerhalb der Kühleinrichtung verbleibt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Seitenansicht einer Laminiervorrichtung,
- Figur 2: eine schematische Ansicht von vorne auf die Laminiervorrichtung gemäß Figur 1,
- Figur 3: eine perspektivische Ansicht eines Werkstückträgers,
- Figur 4: eine schematische Schnittansicht des Werkstückträgers gemäß Figur 3,
- Figur 5: eine schematische Ansicht eines Verbundkörpers,
- Figur 6: eine schematische Schnittansicht einer Kühleinrichtung, und
- Figur 7: eine schematische Ansicht auf einen an die Kühleinrichtung angeschlossenen Kühlkreislauf.

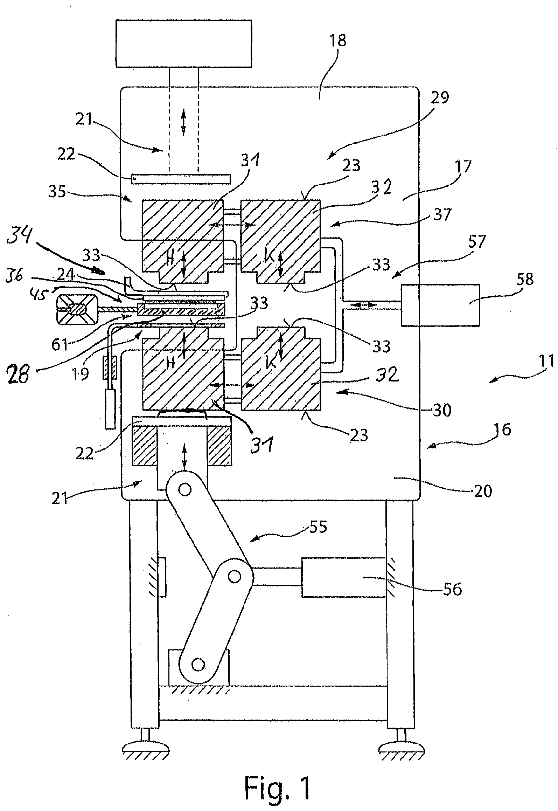

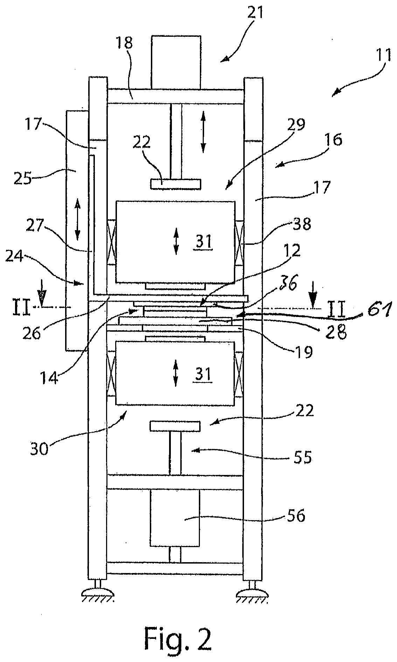

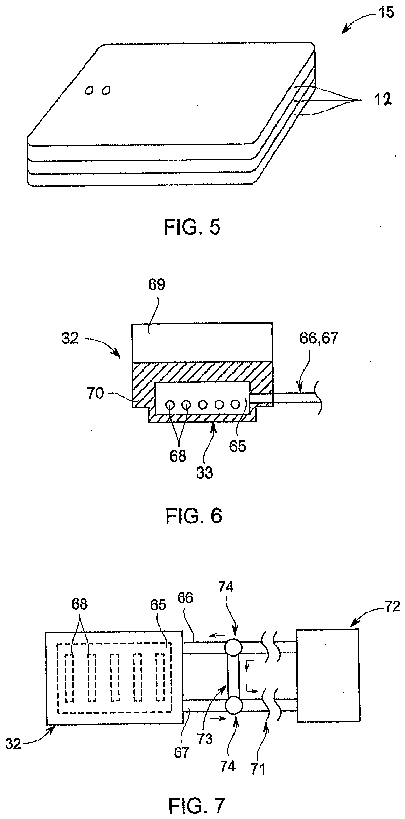

In Figur 1 ist eine schematische Seitenansicht einer Laminiervorrichtung 11 dargestellt. Die Figur 2 zeigt eine schematische Ansicht von vorne auf die Laminiervorrichtung 11 gemäß Figur 1. Diese Laminiervorrichtung 11 ist zum Laminieren eines aus mehreren Substratschichten 12 bestehenden Stapels 14 zu einem Verbundkörper 15 vorgesehen. Dieser Verbundkörper 15, der beispielhaft in Figur 5 dargestellt ist, kann als ein Dokumentenkörper, insbesondere als ein Sicherheitsdokument oder Wertdokument, ausgebildet sein. Auch weitere Identifikationsdokumente oder Scheckkarten, Visa-Karten oder dergleichen können durch den Verbundkörper gebildet werden. Im Fall eines Sicherheitsdokumentenkörpers kann beispielsweise ein ID3-Dokument oder ein ID1-Dokument vorgesehen sein. Das ID1-Dokument kann beispielsweise aus 3 bis 15 Substratschichten bestehen und in einer Arbeitsposition, wie nachfolgend beschrieben sein wird, laminiert werden. Auch können Sicherheitsdokumente mit einem RFID-Chip oder andere elektronische Bauelemente, sogenannte Inlays, zwischen den Substratschichten oder innerhalb der Substratschichten vorgesehen sein, die nach dem Laminieren einen Verbundkörper bilden. Dieser Verbundkörper 15 kann in einem nachfolgenden Schneid- und/oder Stanzprozess auf ein Endformat geschnitten werden. Auch ist möglich, dass die Substratschichten bereits in einem Endformat beigefügt werden, sodass nach dem Laminieren der Verbundkörper 15 ein Endformat aufweist. Auch kann der Verbundkörper 15 ein Zwischenprodukt zur Weiterverarbeitung sein.

Als Substratschichten 12 werden beispielsweise thermoplastische Schichten eingesetzt, insbesondere Polycarbonat, Polypropylen, Polyethylen oder dergleichen. Weitere Materialien, die durch Druck und Temperatur mit einem weiteren Material laminiert werden können, finden ebenso Einsatz. Die Substratschichten 12 können die gleiche Schichtdicke oder voneinander abweichende Schichtdicken aufweisen. Typischerweise können 4 bis 10 Substratschichten 12 zu einem Verbundkörper 15 laminiert werden. Der Verbundkörper 15 kann eine Gesamtdicke von 0,5 bis 1,0 mm, vorzugsweise 0,6 bis 1,5 mm, und besonders bevorzugt in einem Bereich von 0,75 bis 0,95 mm aufweisen.

Die Laminiervorrichtung 11 umfasst einen Grundkörper 16, der als ein Maschinenrahmen 17 ausgebildet ist. Dieser Maschinenrahmen 17 kann C-förmig oder als ein Gestell mit Säulen, insbesondere als ein Gestell mit 4 Säulen, ausgebildet sein. Dieser Maschinenrahmen 17 umfasst einen oberen Querträger 18 und einen unteren Querträger 20. An dem oberen Querträger 18 und dem unteren Querträger 20 ist jeweils eine obere Laminiereinheit 29 und eine untere Laminiereinheit 30 angeordnet. Die obere Laminiereinheit 29 umfasst eine Heizeinrichtung 31 und eine Kühleinrichtung 32. Die untere Laminiereinheit 30 umfasst ebenfalls eine Heizeinrichtung 31 und eine Kühleinrichtung 32. Vorzugsweise sind die obere und untere Laminiereinheit 29, 30 identisch aufgebaut.

Zwischen der oberen und unteren Laminiereinheit 29, 30 ist ein Pressentisch 19 vorgesehen, der ebenfalls am Grundkörper 16 befestigt ist oder dem Grundkörper 16 zwischen der oberen und unteren Laminiereinheit 29, 30 zugeordnet ist.

Der Stempel 21 ist durch eine Presse zu einer Verfahrbewegung ansteuerbar. Dies kann bevorzugt eine hydraulische Presse, ein Druckzylinder oder dergleichen sein. Alternativ zum beweglichen Stempel 21 kann auch ein Kniehebelmechanismus 55 vorgesehen sein, der mittels eines Druckzylinders 56 ansteuerbar ist, um die Druckplatte 22 in der Höhe verfahrbar anzusteuern. Alternativ zum Kniehebelmechanismus 55 können weitere Antriebmechanismen vorgesehen sein, die aufgrund deren Hebelverhältnisse eine Kraftverstärkung ermöglichen.

Im oberen und unteren Querträger 18, 20 ist jeweils ein beweglicher Stempel 21 vorgesehen, der relativ zum Pressentisch 19 auf- und ab bewegbar ist. Dieser bewegliche Stempel 21 umfasst eine Druckplatte 22, welche in der Höhe verfahrbar ansteuerbar ist. Des Weiteren kann ein solcher Niederhalter 24 auch an einer Unterseite des Pressentisches 19 vorgesehen sein. Dieser kann dabei analog zum oberen Niederhalter ausgebildet und angeordnet als auch ansteuerbar sein.

Die obere und untere Laminiereinheit 29, 30 sind in Bezug auf die jeweilige Heizeinrichtung 31 in einer Arbeitsposition 35 angeordnet. In dieser Arbeitsposition 35 der Heizeinrichtung 31 kann nach der Zustellbewegung auf den Stapel 14 das Heizen und Laminieren des Stapels 14 erfolgen. Daran anschließend kann die obere und untere Laminiereinheit 29, 30 durch eine Ansteuerungseinrichtung 57 vorzugsweise gleichzeitig verfahren werden, sodass die Kühleinrichtung 32 in eine Kühlposition 34, die bevorzugt mit der Arbeitsposition 35 identisch ist, übergeführt wird, wobei die Heizeinrichtungen 31 in eine Ruheposition außerhalb des C-förmigen Rahmens anordenbar sind. Diese Antriebseinrichtung 57 kann beispielsweise ein Druckzylinder 58 mit einem Stellmechanismus sein, der an der oberen und unteren Laminiereinheit 29, 30 angreift und durch welchen die obere und untere Laminiereinheit 29, 30 relativ zum C-förmigen Rahmen 17 verfahrbar sind.

Seitlich zum C-förmigen Maschinenrahmen 17 ist der zumindest eine Niederhalter 24 zugeordnet, der durch eine Verfahreinrichtung 25, die an dem C-förmigen Maschinenrahmen 17 befestigt ist, auf- und ab bewegbar, also parallel zum beweglichen Stempel 21 auf- und ab bewegbar, ist. Dieser Niederhalter 24 ist beispielsweise L-förmig ausgebildet, sodass ein L-förmiger Schenkel 26 parallel zum Pressentisch 19 ausgerichtet und der zweite L-förmige Schenkel 27 an der Verfahreinrichtung 25 befestigt ist. Alternativ zum zweiten Schenkel 27 können auch Streben oder andere Befestigungsmöglichkeiten vorgesehen sein.

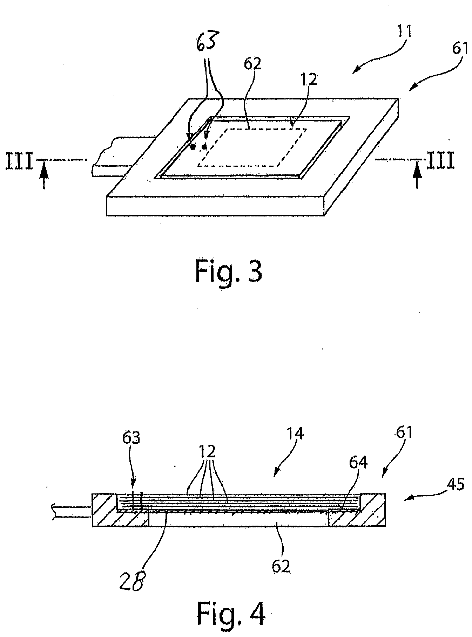

In Figur 3 ist perspektivisch ein Werkstückträger 45 dargestellt. Figur 4 zeigt eine schematische Schnittansicht des Werkstückträgers 45. Der Werkstückträger 45 umfasst einen Aufnahmerahmen 61 mit einer Ausnehmung 62, wobei durch den die Ausnehmung 62 gebildeten umlaufenden Aufnahmerahmen 61 eine Auflagefläche 64 für die Substratschichten 12 gebildet ist. In der Ausnehmung 62 oder an der Auflagefläche 64 aufliegend ist ein Laminierblech 28 vorgesehen. Dieses Laminierblech 28 ist auswechselbar am Aufnahmerahmen 61 vorgesehen.

Die Ausnehmung 62 entspricht in der Größe den Anlageflächen 33 der Heiz- und Kühleinrichtung 31, 32 oder ist geringfügig kleiner. Die Größe der Ausnehmung 62 ist bevorzugt derart gewählt, dass diese gleich groß oder größer als ein Endformat des herzustellenden Verbundkörpers 15 ist. Entlang einer Seitenkante des Aufnahmerahmens 61 kann zumindest eine Fixiereinrichtung 63 vorgesehen sein. Gemäß einer Ausführungsform kann es sich hierbei um zwei zueinander beabstandete Stifte, Dorne, Nadeln oder dergleichen handeln, welche die jeweilige Substratschicht 12 durchdringen und dadurch eine Positionierung und Ausrichtung der Substratschicht 12 in dem Aufnahmerahmen 61 ermöglichen. Die beispielsweise als Dorne ausgebildeten Fixiereinrichtungen 63 sind bevorzugt in der Längsachse des herzustellenden Kartenkörpers ausgerichtet. Dadurch kann eine wellenfreie Ausdehnung der Schichten 12 ermöglicht sein. Bevorzugt ist die umlaufende Auflagefläche 64 für einen Randbereich der Substratschicht 12 gebildet. Dies ermöglicht, dass die Substratschichten 12 in einer der Laminiervorrichtung 11 vorausgehenden Bearbeitungsstation dem Werkstückträger 45 zugeführt und positioniert werden. Des Weiteren können vor dem Zuführen des Werkstückträgers 45 in die Laminierstation einzelne Substratschichten 12 bedruckt und/oder Sicherheitsmerkmale auf oder zwischen die Substratschichten 12 eingebracht werden. Auch kann das Aufbringen eines IC-Chips oder einer Transpondereinheit vorgesehen sein.

Ein solcher Werkstückträger 45 mit darin aufgenommenen Substratschichten 12 wird dem Pressentisch 19 zugeführt. Der Pressentisch 19 weist bevorzugt eine Durchbrechung auf, die im Format und/oder der Größe der Ausnehmung 62 entspricht. Dadurch kann die Anlagefläche 33 der Heiz- und Kühleinrichtung 31, 32 durch den Pressentisch 19 hindurch an dem unteren Laminierblech 28 angreifen und das untere Laminierblech 28 zur Anlage an der untersten Substratschicht 12 gebracht werden. Alternativ kann der untere Niederhalter 24 und/oder das untere Laminierblech 28, 36 entsprechend ausgebildet sein, damit die Heiz- und Kühleinrichtung 31, 32 jeweils die Arbeitsposition zum Stapel 14 einnehmen können.

In dieser in Figur 1 dargestellten Arbeitsposition 35 sind die obere Heiz- oder Kühleinrichtung 31, 32 oberhalb des L-förmigen Schenkels 26 des Niederhalters 24 positioniert, sodass die Heiz- oder Kühltemperatur unmittelbar über das Laminierblech 36 im Niederhalter 24 auf den Stapel 14 einwirken kann.

Die Heiz- und Kühleinrichtungen 31, 32 sind beispielsweise als eine gemeinsame verfahrbare Laminiereinheit 29, 30 ausgebildet. Diese gemeinsame verfahrbare Laminiereinheit 29, 30 ist von einer Führungseinrichtung 37 getragen, welche sich vorzugsweise zwischen den beiden C-förmigen Maschinenrahmen 17 erstreckt. Bei der Führungseinrichtung 37 kann es sich beispielsweise um eine Linearführung handeln, durch welche eine Ein- und Ausfahrbewegung der Heiz- und/oder Kühleinrichtungen 31, 32 in und aus der Arbeitsposition 35 ansteuerbar ist. Die Führungseinrichtung 37 ist jeweils in Zustellrichtung des beweglichen Stempels 21 durch ein Lager 38 federnd nachgiebig gelagert. Insbesondere durch eine Federlagerung 38 wird bei der Einbringung einer Presskraft über den beweglichen Stempel 21 beispielsweise auf die in der Arbeitsposition 35 positionierte Heizeinrichtung 31 eine Zustellbewegung der Heizeinrichtung 31 in Richtung auf den Niederhalter 24 ermöglicht. Diese Presskraft wird dann über die an einer Druckfläche 23 der Heizeinrichtung 31 angreifenden Druckplatte 22 in die Heizeinrichtung 31 eingebracht. Von der Heizeinrichtung 31 wird die Druckkraft über eine Auflagefläche 33 der Heizeinrichtung 31 auf den oberen und/oder unteren Niederhalter 24 und/oder das Laminierblech 28, 36 übertragen. Die eingeleitete Druckkraft und Temperatur werden über den Niederhalter 24 und/oder das Laminierblech 28, 36 auf den Stapel 14 übergeführt. Analoges gilt bei der Positionierung der Kühleinrichtung 32 in der Arbeitsposition 35.

An einer zum Stapel 14 weisenden Seite des Niederhalters 24, insbesondere des L-förmigen Schenkels 26, kann auswechselbar ein Laminierblech 36 vorgesehen sein. Durch ein solches Laminierblech 36 können Oberflächenstrukturen in die oberste Schicht des Stapels 14 eingebracht werden.

Analoges gilt für die unterste Schicht des Stapels 14.

In Figur 6 ist eine schematische Ansicht der Kühleinrichtung 32 dargestellt. In der Kühleinrichtung 32 ist zumindest eine Temperierkammer 65 angeordnet bzw. vorgesehen. Diese Kühleinrichtung 32 umfasst bevorzugt an die Anlagefläche 33 angrenzend eine Temperierkammer 65. Alternativ kann die zumindest eine Temperierkammer 65 an die Kühleinrichtung 32 angrenzend positioniert sein. Diese Temperierkammer 65 ist mit einem Zulauf 66 und einen Ablauf 67 verbunden. Über den Zulauf 66 kann das Medium der Temperierkammer 65 zugeführt und darauffolgend über den Ablauf 67 abgeführt werden, so dass das Medium die Temperierkammer 65 durchströmt. Innerhalb der Temperierkammer 65 ist zumindest ein Heizelement 68 vorgesehen. Bevorzugt sind mehrere Heizelemente 68 in der Temperierkammer 65 angeordnet. Bei diesen Heizelementen 68 kann es sich beispielsweise um Heizpatronen handeln, die elektrisch ansteuerbar sind und beispielsweise als Widerstandsheizelement ausgebildet sein können. Der Anlagefläche 33 der Kühleinrichtung 32 gegenüberliegend ist bevorzugt eine Isolierung 69 vorgesehen. Die Kühleinrichtung 32 ist mit der Isolierung 69 zum Führungselement 37 weisend daran befestigt. Dadurch wird eine Abschirmung beim Erwärmen der Kühleinrichtung 32 gegenüber den weiteren Komponenten der Laminiervorrichtung 11 ermöglicht.

In Figur 7 ist eine schematische Ansicht von oben auf die Kühleinrichtung 32 dargestellt. Die Kühleinrichtung 32 ist über einen Kühlkreislauf 71 mit dem Zulauf 66 und dem Ablauf 67 verbunden. In den Kühlkreislauf 71 ist ein Kühlaggregat 72 eingebunden. In dem Kühlkreislauf 71 ist des Weiteren eine Bypass-Leitung 73 vorgesehen. Diese Bypass-Leitung 73 ist über Ventile 74 ansteuerbar. Sofern die Ventile 74 geschlossen sind, wird das Medium von dem Kühlaggregat 72 der Temperierkammer 75 über den Zulauf 66 zugeführt und darauffolgend über den Ablauf 67 wieder zum Kühlaggregat 72 zurückgeführt. Sofern die Kühleinrichtung 32, wie nachfolgend noch beschrieben, aufgewärmt wird, werden die Ventile 74 angesteuert, so dass das Medium über die Bypass-Leitung 73 unmittelbar zum Kühlaggregat 72 wieder zurückgeführt wird. Dadurch ist die Temperierkammer 65 gesperrt. Ein Durchströmen der Temperierkammer 65 mit Medium ist verhindert.

Nachfolgend wird ein Verfahren zum Laminieren eines aus mehreren Substratschichten 12 bestehenden Stapels 14 zu einem Verbundkörper näher erörtert. Ein Werkstückträger 45 wird beispielsweise mittels einer Transportfördereinrichtung, die nicht näher dargestellt ist, der Laminiervorrichtung 11 zugeführt. Dies kann beispielsweise über eine Handhabungseinrichtung oder durch die Transportvorrichtung selbst erfolgen. Der Werkstückträger 45 mit den darauf aufgebrachten Substratschichten 12, die in einem Stapel 14 übereinanderliegen, wird zum Pressentisch 19 positioniert. Der Werkstückträger 45 kann über die Zentrierelemente 43 zum Pressentisch 19 ausgerichtet werden.

Anschließend wird der obere und/oder untere Niederhalter 24 auf den Stapel 12 zubewegt. Der jeweilige Niederhalter 24 wird mit einer vorbestimmten Kraft in eine Halteposition übergeführt. In dieser Halteposition sind die Substratschichten 12 eng aufeinanderliegend beziehungsweise zumindest geringfügig aufeinander gepresst positioniert und fixiert.

Daraufhin wird die Heizeinrichtung 31 der oberen und unteren Laminiereinheit 29, 30 aus der Ruheposition 34 in die Arbeitsposition 35 übergeführt. Die Kühleinrichtung 32 wird dabei nach links verfahren und ist beispielsweise außerhalb des C-förmigen Rahmens 17 positioniert. In der Ruheposition 34 ist bevorzugt die Heizeinrichtung 31 bereits auf eine Laminiertemperatur aufgeheizt. Die Heizeinrichtung 31 kann beispielsweise aus elektrisch aufheizbaren Heizpatronen entstehen.

In der Arbeitsposition 35 der Heizeinrichtungen 31 werden die beweglichen Stempel 21 aktiviert, wodurch die Druckplatte 22 an der Druckfläche 23 auf der jeweiligen Heizeinrichtung 31 aufliegen und zur Anlage mit dem Niederhalter 24 übergeführt werden. Dabei werden die beweglichen Stempel 21 mit einem vorbestimmten Weg und einer vorbestimmten Druckkraft beaufschlagt. Die Laminiereinheiten 29, 30 werden aufeinander zubewegt.

Anschließend erfolgt ein Aufheizen und Laminieren der Substratschichten 12 zu einem Verbundkörper 15. Die Laminierung des Verbundkörpers 15 wird bevorzugt durch Sensoren überwacht. Zum einen wird mittels eines Drucksensors eine Druckkraft überwacht, mit einem Abstandssensor ein Weg des Stempels 21 oder des Niederhalters 24, mit einem Temperatursensor die Laminiertemperatur und mit einem Zeitmesser die Laminierdauer überwacht. Alle Sensoren führen zu einer nicht näher dargestellten Steuerungseinrichtung, welche zur Ansteuerung der Laminiervorrichtung 11 dient.

Am Ende des Laminierzyklusses werden die beweglichen Stempel 21 wieder nach oben und unten gefahren. Dementsprechend heben die Heizeinrichtungen 31 von den Laminierblechen 28, 36 ab. Der Niederhalter 24 und der Pressentisch 19 bleiben in der voreingestellten Position beziehungsweise in Halteposition, welche sich nach dem Laminieren des Stapels 14 einstellt.

Nach dem Abheben der Heizeinrichtung 31 kann der Verbundkörper 15 noch eine Temperatur von beispielsweise 140 °C bis 180 °C aufweisen. Das Gleiche gilt für den Niederhalter 24 und/oder die Laminierbleche 28, 36.

Die abgehobenen Heizeinrichtungen 31 werden in die Ruheposition und die Kühleinrichtungen 32 in die Kühlposition 34 bzw Arbeitsposition 35 verfahren. Für den Kühlzyklus bzw. den Kühlprozess ist vorgesehen, dass ein Durchströmen der Temperierkammer 65 durch das Medium gesperrt wird. Beispielsweise können die Ventile 74 im Kühlkreislauf 71 geschlossen werden. Gleichzeitig wird das zumindest eine Heizelement 68 in der Temperierkammer 65 der Kühleinrichtung 32 angesteuert, insbesondere bestromt, so dass die Anlagefläche 33 der Kühleinrichtung 32 auf eine Starttemperatur für den Beginn des Kühlzyklus aufgewärmt wird. Die Kühleinrichtung 32 wird auf die Starttemperatur für den Kühlprozess von beispielsweise 30 °C bis 90 °C, vorzugsweise 40 °C bis 60 °C, erwärmt. Diese Aufwärmphase der Kühleinrichtung 32 auf die Starttemperatur für den Kühlzyklus kann bereits gestartet werden, bevor der Laminierzyklus abgeschlossen ist, so dass eine kurze Wechselzeit zwischen der Heizeinrichtung 31 und der Kühleinrichtung 32 in die Kühlposition 34 ansteuerbar ist, um darauffolgend den Kühlprozess zu starten.

Nachdem die Kühleinrichtung 32 in die Kühlposition 34 verfahren ist, wird diese durch die beweglichen Stempel 21 vollflächig zur Anlage an den aufgeheizten Niederhalter 24 und/oder die Laminierbleche 28, 36, gedrückt.

Darauffolgend kann die Starttemperatur der Kühleinrichtung 32 für eine kurze Prozessdauer aufrechterhalten bleiben. Alternativ kann die Kühleinrichtung 32 auch unmittelbar nach dem Anliegen an dem Niederhalter 24 und dem Laminierblech 28, 36 zur Abkühlung angesteuert werden, so dass die Kühleinrichtung 32 durch das Medium auf eine Kühltemperatur abgesenkt wird. Das Absenken der Starttemperatur auf die Kühltemperatur der Kühleinrichtung 32 kann durch das Durchströmen der Temperierkammer 65 und mit dem Medium erfolgen. Dabei kann das Medium mit einer Kühltemperatur von beispielsweise 15 °C bis 25 °C zugeführt werden. Durch das Kühlaggregat 72 kann die Kühltemperatur des Mediums angesteuert werden. Die Heizelemente 68 können gleichzeitig ausgeschalten werden. Alternativ kann auch eine zeitverzögerte Abschaltung erfolgen. Darauffolgend kann die Kühlung über eine Prozessdauer aufrechterhalten werden bis der Verbundkörper 15 auf eine Temperatur von beispielsweise 40 °C bis 50 °C heruntergekühlt wurde. Durch die Zuführung von dem gekühlten Medium kann eine kontrollierte Abkühlung der Kühleinrichtung 32 und somit zumindest der Oberfläche des Verbundkörpers 15 erzielt werden.

Durch diese Kühleinrichtung 32 kann eine Gesamtlaminationszeit von beispielsweise weniger als 45 s (Sekunden) angesteuert werden. Insbesondere kann der Kühlzyklus mit einer Dauer von weniger als 30 s angesteuert und eine hohe Qualität des Verbundkörpers 15 erzielt werden.

Das Medium für die Kühleinrichtung 32 kann bevorzugt Wasser, Kühlwasser oder ein Gel oder gelförmiges Medium sein.

Nach Abschluss des Kühlzyklusses werden die beweglichen Stempel 21 abgehoben. Die Kühleinrichtungen 32 heben von dem Niederhalter 24 und/oder dem Laminierblech 28, 36 ab. Vorteilhafterweise können Abdrückstifte oder Aushebestifte vorgesehen sein, um den Verbundkörper von den Laminierblechen 28, 36 und/oder dem Niederhalter 24 und/oder Werkstückträger 45 zu lösen. Darauffolgend wird der Niederhalter 24 abgehoben. Der Werkstückträger 45 kann aus der Laminiervorrichtung 11 herausgeführt und mittels der Transportvorrichtung zu einer weiteren Bearbeitungsstation verfahren oder einem Magazin zum Stapeln der Verbundkörper übergeführt werden oder für einen weiteren Bearbeitungsschritt bereitstehen.

| | | | | | |
|---|---|---|---|---|---|
| 11. | Laminiervorrichtung | 34. | Kühlposition | 69. | Isolierung |
| 12. | Substratschicht | 35. | Arbeitsposition | 70. | Kühlkörper |
| | | 36. | Laminierblech | 71. | Kühlkreislauf |
| 14. | Stapel | 37. | Führungselement | 72. | Kühlaggregat |
| 15. | Verbundkörper | 38. | Lager | 73. | Bypass-Leitung |
| 16. | Grundkörper | 41. | Auflagefläche | 74. | Ventil |
| 17. | C-förmiger Maschinenrahmen | 43. | Zentrierelement | | |
| 18. | Querträger, oben | 45. | Werkstückträger | | |
| 19. | Pressentisch | 47. | Zentrierstift | | |
| 20. | Querträger, unten | 55. | Kniehebelmechanismus | | |
| 21. | Beweglicher Stempel | 56. | Zylinder | | |
| 22. | Druckplatte | 57. | Ansteuerungseinrichtung | | |
| 23. | Druckfläche | 58. | Druckzylinder | | |
| 24. | Niederhalter | | | | |
| 25. | Verfahreinrichtung | | | | |
| 26. | L-förmiger Schenkel | 61. | Aufnahmerahmen | | |
| 27. | L-förmiger Schenkel | 62. | Ausnehmung | | |
| 28. | Laminierblech | 63. | Fixiereinrichtung | | |
| 29. | Obere Laminiereinheit | 64. | Auflagefläche | | |
| 30. | Untere Laminiereinheit | 65. | Temperierkammer | | |
| 31. | Heizeinrichtung | 66. | Zulauf | | |
| 32. | Kühleinrichtung | 67. | Ablauf | | |
| 33. | Anlagefläche | 68. | Heizelement | | |

## Patentansprüche

1. Verfahren zum Laminieren eines aus mehreren Substratschichten (12) bestehenden Stapels (14) zu einem Verbundkörper (15),
- bei dem der Stapel (14) aus mehreren Substratschichten (12) in einer Laminierposition in einer Laminiervorrichtung (11) positioniert wird,
- bei dem mit einem Niederhalter (24) und/oder Laminierblech (28, 36) der Stapel (14) in der Laminierposition fixiert wird,
- bei dem zumindest eine Heizeinrichtung (31) in eine Arbeitsposition (35) zum Stapel (14) übergeführt und der Stapel (14) mit der zumindest einen Heizeinrichtung (31) auf eine Laminiertemperatur aufgeheizt und die Substratschichten (12) zu dem Verbundkörper (15) laminiert wird,
- bei dem darauffolgend die zumindest eine Heizeinrichtung (31) aus der Arbeitsposition (35) herausgeführt und zumindest eine Kühleinrichtung (32) in eine Kühlposition (34) zum Kühlen des Verbundkörpers (15) übergeführt wird,
**dadurch gekennzeichnet,**
- **dass** die zumindest eine Kühleinrichtung (32) auf eine Starttemperatur zum Kühlen des Verbundkörpers (15) aufgewärmt wird, die niedriger als die Laminiertemperatur der Substratschichten (12) des Stapels (14) und höher als eine Kühltemperatur der Kühleinrichtung (32) am Ende des Kühlzyklus ist,
- **dass** die mit der Starttemperatur aufgewärmte zumindest eine Kühleinrichtung (32) in die Kühlposition (34) zur Anlage an dem Niederhalter (24) und/oder Laminierblech (28, 36) übergeführt wird, und
- **dass** nach der Einnahme der Kühlposition (34) durch die zumindest eine Kühleinrichtung (32) ein Absenken der Starttemperatur auf die Kühltemperatur der Kühleinrichtung (32) angesteuert wird.

2. Verfahren nach Anspruch 1, **dadurch gekennzeichnet, dass** die Kühleinrichtung (32) eine Anlagefläche (33) aufweist, die in der Kühlposition (34) der Kühlvorrichtung (32) zur Anlage an dem Niederhalter (24) und/oder Laminierblech (28, 36) positioniert wird und die Anlagefläche (33) durch eine Temperierkammer (65) der Kühleinrichtung (32) mit einem Medium temperiert wird.

3. Verfahren nach Anspruch 2, **dadurch gekennzeichnet, dass** zum Aufwärmen der Kühleinrichtung (32) das Durchströmen der Temperierkammer (65) mit dem Medium gesperrt wird und zumindest ein in der Temperierkammer (65) angeordnetes oder der Temperierkammer (65) zugeordnetes Heizelement (68) aufgeheizt wird.

4. Verfahren nach einem der vorhergehenden Ansprüche, **dadurch gekennzeichnet, dass** die zumindest eine Kühleinrichtung (32), insbesondere die Anlagefläche (33) der Kühleinrichtung (32), auf die Starttemperatur zwischen 30 °C bis 90 °C, vorzugsweise 40 °C bis 60 °C, aufgeheizt wird.

5. Verfahren nach einem der Ansprüche 2 bis 4, **dadurch gekennzeichnet, dass** zeitgleich mit dem Anliegen der Anlagefläche (33) der zumindest einen Kühleinrichtung (32) in der Kühlposition (34) zu dem Niederhalter (24) und/oder dem Laminierblech (28, 36) oder zeitverzögert nach dem Anliegen der Kühleinrichtung (32) in der Kühlposition (34) nach einer vorbestimmten Prozessdauer, vorzugsweise einer Prozessdauer von bis zu einer Minute, die Temperierkammer (65) geöffnet und mit dem Medium zum Absenken der Starttemperatur der Kühleinrichtung (32) durchströmt wird.

6. Verfahren nach Anspruch 5, **dadurch gekennzeichnet, dass** das zumindest eine Heizelement (68) zeitgleich mit dem Öffnen der Temperierkammer (65) zum Durchströmen mit dem Medium oder zeitverzögert abgeschalten wird.

7. Verfahren nach einem der vorhergehenden Ansprüche, **dadurch gekennzeichnet, dass** die zumindest eine Kühleinrichtung (32), insbesondere die Anlagefläche (33) der Kühleinrichtung (32) auf eine Kühltemperatur zwischen 15 °C bis 25 °C gekühlt wird.

8. Verfahren nach einem der Ansprüche 2 bis 7, **dadurch gekennzeichnet, dass** das Medium, welches vorzugsweise flüssig oder gelförmig ist, mit einem Kühlaggregat (72) abgekühlt wird, welches über einen Kühlkreislauf (71) mit der Temperierkammer (65) der zumindest einen Kühleinrichtung (32) verbunden ist.

9. Verfahren nach Anspruch 8, **dadurch gekennzeichnet, dass** zwischen der Kühleinrichtung (32) und dem Kühlaggregat (72) eine Bypass-Leitung (73) ansteuerbar ist, durch welche die Durchströmung der Temperierkammer (65) mit dem Medium oder ein Schlie-βen der Temperierkammer (65) angesteuert wird.

10. Verfahren nach einem der vorhergehenden Ansprüche, **dadurch gekennzeichnet, dass** der Verbundkörper (15) durch die zumindest eine Kühleinrichtung (32) auf eine Temperatur zwischen 30 °C bis 50 °C abgekühlt und darauffolgend die zumindest eine Kühleinrichtung (32) aus der Kühlposition (34) herausgeführt wird.

11. Verfahren nach einem der vorhergehenden Ansprüche, **dadurch gekennzeichnet, dass** die Laminiervorrichtung (11) eine obere und eine untere Laminiereinheit (29, 30) mit der Heizeinrichtung (31) und der Kühleinrichtung (32) aufweist und die Kühleinrichtung (32) der oberen und der unteren Laminiereinheit (29, 30) gleichzeitig in die Kühlposition (34) übergeführt werden.

## Claims

1. Method for laminating a stack (14) consisting of a plurality of substrate layers (12) to form a composite (15),
- in which the stack (14) comprising a plurality of substrate layers (12) is positioned in a laminating position in a laminating device (11),
- in which the stack (14) is fixed in the laminating position by means of a holding-down device (24) and/or laminating plate (28, 36),
- in which at least one heating device (31) is transferred into a working position (35) in relation to the stack (14) and the stack (14) is heated up to a laminating temperature by means of the at least one heating device (31) and the substrate layers (12) are laminated to form the composite body (15),
- in which subsequently the at least one heating device (31) is moved out of the working position (35) and at least one cooling device (32) is transferred into a cooling position (34) for cooling the composite body (15),
**characterized in**
- **that** the at least one cooling device (32) is heated to a starting temperature for cooling the composite body (15), which is lower than the laminating temperature of the substrate layers (12) of the stack (14) and higher than a cooling temperature of the cooling device (32) at the end of the cooling cycle,
- **that** the at least one cooling device (32) heated to the starting temperature is transferred to the cooling position (34) for abutment against the holding-down device (24) and/or laminating plate (28, 36), and
- **that** after the at least one cooling device (32) has assumed the cooling position (34), a lowering of the starting temperature to the cooling temperature of the cooling device (32) is controlled.

2. Method according to claim 1, **characterized in that** the cooling device (32) has a contact surface (33) which, in the cooling position (34) of the cooling device (32), is positioned to bear against the holding-down device (24) and/or laminating plate (28, 36) and the contact surface (33) is tempered by means of a tempering chamber (65) of the cooling device (32) with a medium.

3. Method according to claim 2, **characterized in that**, to heat up the cooling device (32), the flow of the medium through the temperature-control chamber (65) is blocked and at least one heating element (68) arranged in the temperature-control chamber (65) or assigned to the temperature-control chamber (65) is heated.

4. Method according to one of the preceding claims, **characterized in that** the at least one cooling device (32), in particular the contact surface (33) of the cooling device (32), is heated to the starting temperature between 30°C and 90°C, preferably between 40°C and 60°C.

5. Method according to one of claims 2 to 4, **characterized in that** the temperature control chamber (65) is opened simultaneously with the application of the contact surface (33) of the at least one cooling device (32) in the cooling position (34) to the hold-down device (24) and/or the laminating plate (28, 36) or with a time delay after the cooling device (32) has been moved into the cooling position (34) after a predetermined process duration, preferably a process duration of up to one minute, the tempering chamber (65) is opened and the medium flows through it to lower the starting temperature of the cooling device (32).

6. Method according to claim 5, **characterized in that** the at least one heating element (68) is switched off simultaneously with the opening of the temperature control chamber (65) for the medium to flow through or with a time delay.

7. Method according to one of the preceding claims, **characterized in that** the at least one cooling device (32), in particular the contact surface (33) of the cooling device (32), is cooled to a cooling temperature between 15°C and 25°C.

8. Method according to one of claims 2 to 7, **characterized in that** the medium, which is preferably liquid or gel-like, is cooled by means of a cooling unit (72) which is connected to the temperature control chamber (65) of the at least one cooling device (32) via a cooling circuit (71).

9. Method according to claim 8, **characterized in that** a bypass line (73) is activatable between the cooling device (32) and the cooling unit (72), by means of which the flow of the medium through the temperature control chamber (65) or the closure of the temperature control chamber (65) is activated.

10. Method according to one of the preceding claims, **characterized in that** the composite body (15) is cooled by the at least one cooling device (32) to a temperature between 30°C and 50°C and then the at least one cooling device (32) is moved out of the cooling position (34).

11. Method according to one of the preceding claims, **characterized in that** the laminating device (11) has an upper and a lower laminating unit (29, 30) with the heating device (31) and the cooling device (32) and the cooling device (32) of the upper and lower laminating units (29, 30) are simultaneously moved into the cooling position (34).

## Revendications

1. Procédé pour laminer d'un empilement (14) composé de plusieurs couches de substrat (12) en un corps composite (15),
- dans lequel la pile (14) de plusieurs couches de substrat (12) est positionnée dans une position de laminage dans un dispositif de laminage (11),
- dans lequel la pile (14) est fixée dans la position de laminage à l'aide d'un serre-flan (24) et/ou d'une tôle de laminage (28, 36),
- dans lequel au moins un dispositif de chauffage (31) est amené dans une position de travail (35) par rapport à la pile (14) et la pile (14) est chauffée avec le au moins un dispositif de chauffage (31) à une température de laminage et les couches de substrat (12) sont laminées pour former le corps composite (15),
- dans lequel ensuite le au moins un dispositif de chauffage (31) est sorti de la position de travail (35) et au moins un dispositif de refroidissement (32) est transféré dans une position de refroidissement (34) pour refroidir le corps composite (15),
**caractérisé en ce que**
- **en ce que** le au moins un dispositif de refroidissement (32) est chauffé à une température de départ pour refroidir le corps composite (15) qui est inférieure à la température de laminer des couches de substrat (12) de l'empilement (14) et supérieure à une température de refroidissement du dispositif de refroidissement (32) à la fin du cycle de refroidissement,
- **en ce que** le au moins un dispositif de refroidissement (32) réchauffé à la température de départ est transféré dans la position de refroidissement (34) pour s'appliquer contre le serre-flan (24) et/ou la tôle de laminage (28, 36), et
- **en ce qu'**après la prise de la position de refroidissement (34) par le au moins un dispositif de refroidissement (32), une baisse de la température de départ à la température de refroidissement du dispositif de refroidissement (32) est commandée.

2. Procédé selon la revendication 1, **caractérisé en ce que** le dispositif de refroidissement (32) comporte une surface d'appui (33) qui est positionnée dans la position de refroidissement (34) du dispositif de refroidissement (32) pour venir en appui sur le serre-flan (24) et/ou la tôle de laminage (28, 36) et la surface d'appui (33) est mise en température par un fluide par une chambre de mise en température (65) du dispositif de refroidissement (32).

3. Procédé selon la revendication 2, **caractérisé en ce que** pour chauffer le dispositif de refroidissement (32), on bloque le passage du fluide dans la chambre de mise en température (65) et on chauffe au moins un élément chauffant (68) disposé dans la chambre de mise en température (65) ou associé à la chambre de mise en température (65).

4. Procédé selon l'une des revendications précédentes, **caractérisé en ce que** le au moins un dispositif de refroidissement (32), en particulier la surface d'appui (33) du dispositif de refroidissement (32), est chauffé à la température de départ comprise entre 30 °C et 90 °C, de préférence entre 40 °C et 60 °C.

5. Procédé selon l'une des revendications 2 à 4, **caractérisé en ce que**, simultanément à l'application de la surface d'appui (33) de l'au moins un dispositif de refroidissement (32) dans la position de refroidissement (34) contre le serre-flan (24) et/ou la tôle de laminage (28, 36) ou de manière différée après l'application du dispositif de refroidissement (32) dans la position de refroidissement (34) après une durée de processus prédéterminée, de préférence une durée de processus allant jusqu'à une minute, la chambre de thermostatisation (65) est ouverte et est traversée par le fluide pour abaisser la température de départ du dispositif de refroidissement (32).

6. Procédé selon la revendication 5, **caractérisé en ce que** l'au moins un élément chauffant (68) est désactivé en même temps que l'ouverture de la chambre de régulation de température (65) pour le passage du fluide ou de manière différée.

7. Procédé selon l'une des revendications précédentes, **caractérisé en ce que** ledit au moins un dispositif de refroidissement (32), notamment la surface d'appui (33) du dispositif de refroidissement (32), est refroidi à une température de refroidissement comprise entre 15°C et 25°C.

8. Procédé selon l'une des revendications 2 à 7, **caractérisé en ce que** le fluide, qui est de préférence liquide ou sous forme de gel, est refroidi avec un groupe de refroidissement (72) qui est relié à la chambre de régulation de température (65) de l'au moins un dispositif de refroidissement (32) par un circuit de refroidissement (71).

9. Procédé selon la revendication 8, **caractérisé en ce qu'**une conduite de dérivation (73) peut être commandée entre le dispositif de refroidissement (32) et le groupe de refroidissement (72), conduite par laquelle le passage du fluide dans la chambre de thermostatisation (65) ou une fermeture de la chambre de thermostatisation (65) est commandée.

10. Procédé selon l'une des revendications précédentes, **caractérisé en ce que** le corps composite (15) est refroidi par le au moins un dispositif de refroidissement (32) à une température comprise entre 30 °C et 50 °C, puis on fait sortir ledit au moins un dispositif de refroidissement (32) de la position de refroidissement (34).

11. Procédé selon l'une des revendications précédentes, **caractérisé en ce que** le dispositif de laminage (11) comprend une unité de laminage supérieure et une unité de laminage inférieure (29, 30) avec le dispositif de chauffage (31) et le dispositif de refroidissement (32), et les dispositifs de refroidissement (32) de l'unité de laminage supérieure et de l'unité de laminage inférieure (29, 30) sont transférés simultanément dans la position de refroidissement (34).
